# EUROPÄISCHE PATENTSCHRIFT

(11) **EP 2 411 779 B1**
(45) Veröffentlichungstag und Bekanntmachung des Hinweises auf die Patenterteilung: **27.07.2016**
(21) Anmeldenummer: 10715678.8
(22) Anmeldetag: 25.03.2010
(51) Int. Cl.: G01L 3/14

(54) **DREHMOMENTSENSOR**
TORQUE SENSOR
CAPTEUR DE COUPLE

(30) Priorität: 25.03.2009 DE 102009014284
(43) Veröffentlichungstag der Anmeldung: 01.02.2012
(73) Patentinhaber: Hottinger Baldwin Messtechnik GmbH, 64293 Darmstadt (DE)
(72) Erfinder: NOLD, Werner, D-64560 Riedstadt (DE); ANDRAE, Jürgen, D-64331 Weiterstadt (DE)
(74) Vertreter: Staudte, Ralph
(86) Internationale Anmeldenummer: PCT/EP2010/001861
(87) Internationale Veröffentlichungsnummer: WO 2010/108674

(56) Entgegenhaltungen:
- DE-A1- 4 208 522
- DE-A1- 19 640 717
- DE-C1- 4 430 503
- GB-A- 939 175
- US-A- 5 672 834
- US-A1- 2004 007 082

## Beschreibung

Die Erfindung betrifft einen Drehmomentsensor gemäß dem Oberbegriff des Patentanspruchs 1.

An rotierenden Maschinen ist es häufig notwendig, während des Betriebs deren Drehmomente zu erfassen. Dazu werden insbesondere Drehmomente von rotierenden Wellen gemessen, bei denen die Drehmomentaufnehmer synchron mit der Welle umlaufen und dass durch die Welle übertragene Drehmoment permanent erfassen. Hierzu werden häufig mit Drehmomentmessstreifen bestückte Drehmomentsensoren eingesetzt, die zwischen den drehenden Wellenteilen positioniert und an diesen befestigt sind. Die Drehmomentaufnehmer besitzen dazu meist ringförmige Befestigungsflansche, die mit gegenüberliegenden Flanschen der Wellen verschraubt werden. Dabei ist es oft notwendig, dass die Drehmomentaufnehmer auch in relativ kurze Wellenstücke oder zwischen vorhandene Flansche befestigt werden, wobei nur wenig axialer Bauraum zur Verfügung steht. Derartige Befestigungen müssen dabei so ausgeführt werden, dass möglichst wenig Störspannungen beziehungsweise Störkräfte in den Dehnungsmesskörper bzw. Verformungskörper gelangen können, um eine hohe Messgenauigkeit zu gewährleisten.

Ein sehr kurz bauender Drehmomentsensor ist aus der DE 42 08 522 C2 bekannt, der scheibenförmig ausgebildet ist. Dieser einstückige Drehmomentaufnehmer besteht aus einem Außenring und einer dazu konzentrischen Innennabe, die durch vier radial verlaufende Messstege miteinander verbunden sind. Dabei weisen die Messstege axial gegenüberliegende taschenförmige Aussparungen auf, durch die eine dünnwandige Stirnfläche am Grund der Tasche verbleibt, auf die Scherkraftaufnehmer in Form von Foliendehnungsmessstreifen appliziert sind. Die Scherkraftaufnehmer erfassen dabei auf den Dehnungsmesskörpern am Grund der Taschen das übertragene Drehmoment. Zur Ein- und Ausleitung des zu übertragenen Drehmoments sind sowohl in der Innennabe als auch im Außenring vorzugsweise acht Bohrungen eingebracht, an die die Wellenenden fest angeschraubt werden. Da die Befestigungsbohrungen der Innennabe relativ dicht an den Messstegen angeordnet sind, können durch unterschiedliche Verschraubungen und Herstellungstoleranzen auch störende Biegespannungen oder andere parasitäre Kräfte in die Messstege einwirken, die dann das Messergebnis verfälschen.

Ein Drehmomentsensor, bei dem die Befestigungsbereiche relativ weit vom Dehnungsmesskörper entfernt sind, ist aus der EP 1 074 826 B1 bekannt. Dieser Drehmomentsensor ist einstückig ausgebildet und enthält zwei axial gegenüberliegende Befestigungsflansche, die in einem radial innenliegenden Bereich durch ein kurzes axiales Momentenübertragungselement miteinander verbunden sind. Das Momentenübertragungselement besteht aus einer nach innen geschlossenen zylindrischen Mantelfläche und radial nach außen gerichteten axialen Stegen, zwischen denen koaxial zur Drehachse Messtaschen angeordnet sind. Durch die Messtaschen entstehen dünne membranartige Dehnungsbereiche als Verformungskörper, auf denen Dehnungsmessstreifen appliziert sind, die ein genaues Messsignal liefern, das dem übertragenen Drehmoment proportional ist. Da die beiden Befestigungsflansche einen gleich großen Durchmesser aufweisen und die Befestigungsbohrungen auf dessen äußeren Ringflächen angeordnet sind, wird gewährleistet, dass störende Biegespannungen oder andere parasitäre Kräfte in den symmetrisch dazwischenliegenden Dehnungsmesskörpern mit den Dehnungsmessstreifen kaum wirksam sind. Allerdings ist der rohrförmige Messkörper in Längsrichtung zwischen den beiden Befestigungsflanschen angeordnet, so dass ein derartiger Drehmomentsensor für viele Anwendungen zu langbauend und deshalb in kurzen Wellenbereichen nicht einsetzbar ist.

Aus der DE 44 30 503 C1 ist ein in Längsrichtung sehr kurzer Drehmomentsensor bekannt, der ebenfalls zwei gleich große rotationssymmetrische Befestigungsflansche aufweist. Diese sind parallel und axial gegenüberliegend angeordnet, scheibenförmig ausgebildet und radial innenliegend durch ein massives ringförmiges Kraftübertragungsteil miteinander verschweißt. Dadurch sind die beiden Befestigungsflansche nur durch einen geringen Luftspalt axial voneinander beabstandet. Einer der beiden Befestigungsflansche ist dabei mit einem koaxial zur Drehachse umlaufenden Dehnungsmesskörper ausgestattet, auf dessen ringförmiger äußerer Stirnfläche Dehnungsmessstreifen in Form von Scherkraftaufnehmern appliziert sind. Der Dehnungsmesskörper ist dabei durch zwei axial gegenüberliegende koaxial umlaufende Ringnuten gebildet, die aus dem als Messflansch ausgebildeten Befestigungsflansch ausgearbeitet sind. Der zwischen den Ringnuten verbleibende Dehnungsmesskörper ist dabei radial zwischen dem ringförmigen äußeren Befestigungsteil und dem innenliegenden Kraftübertragungsteil angeordnet. Wegen der radial abnehmenden Tangentialkraftwirkung ist der kreisringförmige Dehnungsmesskörperteil von innen nach außen in seiner Dicke gleichmäßig abnehmend ausgebildet. Da das gesamte Drehmoment über den kreisringförmigen Messkörperteil übertragen werden muss, ist dessen axiale Dicke relativ groß dimensioniert, wodurch die Messempfindlichkeit verringert wird. Gleichzeitig werden über den gleichmäßigen kreisringförmig ausgebildeten Messkörperteil auch störende Biegespannungen. oder andere parsitäre Kräfte übertragen, wodurch die Messgenauigkeit zusätzlich beeinträchtigt werden kann. Ein anderes Beispiel von einem Drehmomensensor wird im Dokument GB 939 175 beschrieben.

Der Erfindung liegt deshalb die Aufgabe zugrunde, einen möglichst kurz bauenden Drehmomentsensor zu schaffen, dessen Empfindlichkeit und Messgenauigkeit verbessert wird.

Diese Aufgabe wird durch die im Patentanspruch 1 angegebene Erfindung gelöst. Weiterbildungen und vorteilhafte Ausführungsbeispiele sind in den Unteransprüchen angegeben.

Die Erfindung hat den Vorteil, dass durch die koaxial umlaufend geschlossenen Messtaschen und Versteifüngsstege eine hohe Drehsteifigkeit des Dehnungsmesssensors erreicht wird. Gleichfalls sind die Wanddicken der Taschengrundflächen als Dehnungs- oder Verformungskörper in einer membranartigen Dicke ausführbar, so dass relativ dünne federelastische Dehnungszonen entstehen, die eine hohe Messempfindlichkeit gewährleisten. Zusätzlich wird durch die zwischen den Messtaschen vorgesehenen radialen Versteifungsstege eine große Biege- und Axialsteifigkeit erreicht, wodurch Störkräfte oder andere parasitäre Kräfte von den Verformungszonen in den Taschengrundflächen fern gehalten werden, so dass vorteilhafterweise eine hohe Messgenauigkeit erzielbar ist.

Die Erfindung hat weiterhin den Vorteil, daß durch die ganzseitig geschlossenen und mit Versteifungsstegen versehenen Befestigungsflansche auch bei einer dünnen scheibenförmigen Ausgestaltung große Drehmomente bei hoher Drehsteifigkeit übertragen können. Durch die geringen Materialdicken des scheibenförmigen Grundkörpers ist gleichfalls ein Drehmomentsensor mit geringem Massenträgheitsmoment erreichbar, der vorteilhafterweise auch hohe Messdrehzahlen ermöglicht.

Bei einer Weiterbildung des Erfindungsgedankens ist vorgesehen, den Drehmomentsensor mit den Befestigungsflanschen, dem Drehmomentübertragungselement sowie den Versteifungsstegen und den Messtaschen als einteiligen Grundkörper mithilfe herkömmlicher Dreh- und Fräsarbeiten herzustellen, wodurch die Hystereseeigenschaft des Drehmomentsensors gegenüber verschraubten oder verschweißten Teilen erheblich verbessert wird. Da hierdurch keine Reibungs- und Setzeigenschaften auftreten können, wird eine gleichbleibend hohe Messgenauigkeit dauerhaft gewährleistet.

Bei einer weiteren besonderen Ausführungsart ist vorgesehen, die Messtaschen axial gegenüberliegend anzuordnen. Dies hat den Vorteil, dass sich durch eine derartige symmetrische Anordnung die störenden Biegespannungen und parasitären Störkräfte im Dehnungsmessbereich der Taschengrundflächen verringern lässt, wodurch die Messgenauigkeit verbessert werden kann. Insbesondere wenn auch in den gegenüberliegenden Messtaschen Scherkraftaufnehmer appliziert sind, lassen sich dadurch die axialen Biegespannungen vorteilhaft kompensieren.

Bei einer bevorzugten Ausführungsform ist vorgesehen, die Messtaschen zwar gegenüberliegend anzuordnen, aber jeweils in tangential versetzter Anordnung. Hierdurch entsteht auch ein weitgehend symmetrischer Dehnungsverlauf weitgehend ohne störende Biegespannungen und parasitäre Störkräfte, wobei sich aber Applikationsflächen für die Scherkraftaufnehmer ergeben, die auf der Rückseite der Taschengrundfläche als Taschenaußenfläche liegen. Dies hat insbesondere bei einer einseitigen und nach außen gerichteten Taschenaußenfläche den Vorteil, dass die Applikationsfläche nicht in einer Vertiefung liegt, wodurch sich die Genauigkeit der manuell ausführbaren Dehnungsmessstreifenapplikation verbessern lässt.

Bei einer weiteren besonderen Ausführung des Erfindungsgedankens ist vorgesehen, die Versteifungsstege,in radialer Richtung zur Drehachse zu verbreitern und dabei gleichzeitig die Messtaschen entsprechend zur Messachse zu verkleinern. Dadurch wirkt die durch das Drehmoment eingeleitete Tangentialkraft entsprechend dem Abstand zur Drehachse vergleichmässigt, so dass auf der gesamten Messkörperfläche bei einem gleichbleibenden Drehmoment vorteilhafterweise eine konstante Scherdehnung wirksam ist. Durch die radiale Anordnung der Scherkraftaufnehmer führt dies vorteilhafterweise zu einer hohen Messgenauigkeit auch bei gleichbleibend dünnen empfindlichen Dehnungsmesskörpern.

Um Messwert verfälschende und parasitäre Störkräfte zu entkoppeln, ist bei einer weiteren bevorzugten Ausführungsform auf der außenliegenden Stirnfläche des Messflansches zwischen dessen Außenring und den koaxial umlaufend angeordneten Messtaschen eine axiale Ringnut eingelassen. Denn durch unterschiedliche Anzugsmomente der Befestigungsschrauben und eventuelle Fertigungsungenauigkeiten der Befestigungsbohrungen kann es zu störenden Biegespannungen und parasitären Kräften kommen, die durch die umlaufende ringförmige Nut vorteilhafterweise von den Messkörperflächen ferngehalten werden, wodurch eine hohe Messgenauigkeit erzielbar ist.

Eine weitere besondere Ausführung der Erfindung mit einer axialen Vertiefung im radialen Innenraum des Messflansches radial zwischen dem Außenring und der Drehachse hat den Vorteil, dass dadurch die gesamte Sensorelektronik inklusive der einseitig zum Innenraum angeordneten Dehnungsmessstreifen und dessen Verdrahtung hermetisch abdichtbar unter einem angeschraubten oder aufgeschweißten Deckel unterbringbar ist.

Bei einer weiteren besonderen Anordnung ist noch ein in einer Schwalbenschwanzpassung am Außenumfang des Messflansches eingeschmolzener Antennenteil vorgesehen, dessen Anschlußleitung ebenfalls vom Außenring in den abgedichteten Innenraum geführt ist. Dadurch wird vorteilhafterweise ein insgesamt hermetisch abgedichteter Drehmomentsensor geschaffen, der wegen der Schwalbenschwanzpassung auch für hohe Messdrehzahlen bis 50.000 Umdrehungen pro Minute geeignet ist.

Die Erfindung wird anhand eines Ausführungsbeispiels, das in der Zeichnung dargestellt ist, näher erläutert. Es zeigen:
- Fig. 1:: eine Schnittdarstellung durch einen Drehmomentsensor mit axial einseitig angeordneten Messtaschen, und
- Fig. 2:: eine Schnittdarstellung durch einen Drehmomentsensor mit axial zweiseitig angeordneten Messtaschen.

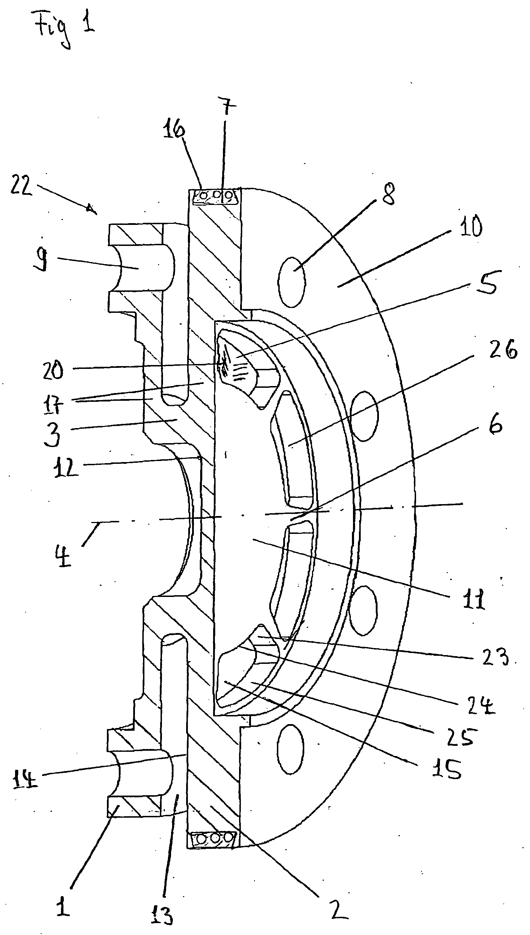

In Fig. 1 der Zeichnung ist ein einteiliger Drehmomentsensor im Schnitt dargestellt, der aus zwei rotationssymmetrischen axial gegenüberliegenden scheibenförmigen Befestigungsflanschen 1, 2 besteht, die durch ein ringförmiges Momentenübertragungselement 3 starr miteinander verbunden sind, wobei auf einer nach außen gerichteten Scheibenfläche eines als Messflansch 2 ausgebildeten Befestigungsflansches in radial gleichbleibendem Abstand zur Drehachse 4 als Aussparung 5 vorzugsweise acht Messtaschen 5 vorgesehen sind, auf deren Grundfläche 15 als Scherkraftaufnehmer Dehnungsmessstreifen 20 appliziert sind, wobei die Messtaschen 5 durch acht radiale Versteifungsstege 6 voneinander getrennt sind.

Der dargestellte Drehmomentsensor ist zur Messung von Drehmomenten bis zu einem Nenndrehmoment von 1 kNm zwischen zwei Wellen- oder Maschinenteilen mit einer Nenndrehzahl bis ca. 25.000 Umdrehungen pro Minute vorgesehen, wobei derartige Drehmomentsensoren auch für Nenndrehmomente von 100 Nm bis mindestens 10 kNm ausführbar sind. Dabei werden die Wellen- oder Maschinenteile zur Drehmomentein- und -ausleitung mit beiden Befestigungsflanschen 1, 2 über daran befindliche Befestigungsbohrungen 8, 9 verschraubt. Die Befestigungsbohrungen 8, 9 sind dabei beim ersten Befestigungsflansch 1 vorzugsweise als Durchgangsbohrung 9 und beim zweiten Befestigungsflansch 2 als Gewindebohrung 8 ausgeführt, so dass die Verschraubung von einer axialen Seite her erfolgen kann. Die beiden Befestigungsflansche 1, 2 sind dabei in ihrem radialen äußeren Bereich in ihrer axialen Dicke verstärkt und dadurch als Aussenring 10 ausgebildet und mit den Befestigungsbohrungen 8, 9 versehen. Dabei weisen die Aussenringe 10 vorzugsweise einen Aussendurchmesser von ca. 130 bis 150 mm auf, wobei die Befestigungsbohrungen 8, 9 symmetrisch zur Drehachse 4 verteilt sind.

Zwischen beiden Befestigungsflanschen 1, 2 ist bis zum Momentenübertragungselement 3 eine radial nach außen hin offene schmale Abstandsnut 13 von ca. 2 bis 10 mm in einen Grundkörper 22 eingefräst, so dass sich die beiden Befestigungsflansche 1, 2 parallel beabstandet axial gegenüberstehen. Dabei sind die gegenüberliegenden Befestigungsflansche 1, 2 innerhalb der Abstandsnut 13 als ebene Nutflächen 14 ausgebildet. Der zweite Befestigungsflansch 2, der einen Messflansch darstellt, ist an seiner axialen Aussenseite mit einer abgestuften Struktur versehen, durch die eine innenliegende Vertiefung 11 gebildet wird. Radial innenliegend zum Aussenring 10 ist der Messflansch 2 gegenüber dem Aussenring 10 im inneren Scheibenelement 17 mit einer dünneren Wandstärke versehen, durch die das Drehmoment vom Aussenring 10 auf das radial innenliegende Momentenübertragungselement 3 übertragen wird. Dabei sind vorzugsweise Wandstärken im inneren Scheibenelement 17 von 5 bis 10 mm ausreichend und dies bei beiden Befestigungsflanschen 1, 2.

Im Zentrum des ersten Befestigungsflansches 1 ist eine axiale Sackbohrung 12 symmetrisch zur Drehachse 4 bis in den zweiten Befestigungsflansch 2 eingebracht, durch die die träge Masse des Grundkörpers 22 verringert wird. Beim zweiten Befestigungsflansch, dem Messflansch 2, ist radial innenliegend zum Aussenring 10 die zylinderförmige axiale Vertiefung 11 symmetrisch zur Drehachse 4 eingearbeitet, die etwa einen Durchmesser von 90 bis 110 mm und eine Tiefe von ca. 5 bis 15 mm aufweist. In dieser Vertiefung 11 sind symmetrisch zur Drehachse 4 vorzugsweise acht ca. 5 bis 10 mm tiefe Messtaschen 5 eingefräst, die zur Nutfläche 14 eine gleichmäßige Dicke von 0,2 bis 1 mm belassen und die nach axial aussen eine ebene Grundfläche 15 bilden.

Auf der Grundfläche 15 sind dabei Dehnungsmessstreifen in Form von Scherkraftaufnehmern 20 appliziert, wobei mindestens vier oder acht Dehnungsmessstreifen 20 symmetrisch verteilt zur Drehachse 4 vorgesehen sind. Die Messtaschen 5 weisen an ihrer radialen Innenwand 24 eine Rundung mit einem Durchmesser von ca. 35 mm und an der radialen Außenwand 25 eine Rundung mit einem Durchmesser von ca. 45 mm zur Drehachse 4 auf, wobei die Messtaschen 5 sich in ihrer Länge über einen Winkelbereich von ca. 40° erstrecken und damit einen Ringnutabschnitt 26 um die Drehachse 4 darstellen.

Zwischen den Messtaschen 5 sind Versteifungsstege 6 belassen, die an ihrem radial innenliegenden Anfang bei einer Steghöhe von vorzugsweise ca. 5mm eine Stegbreite von ca. 5 mm besitzen und radial zum Außenring 10 eine gleichmäßige Verjüngung auf ca. 3 mm aufweisen. Durch diese Formgebung der Messtaschen 5 entsteht auf der Grundfläche 15 bei einer Drehmomentbelastung des Drehmomentsensors eine gleichmäßige Dehnungszone, die unabhängig vom Abstand zur Drehachse 4 ist. Dabei wird durch die Versteifungsstege 6 eine Verstärkung in Drehrichtung und in axialer Richtung bewirkt, so dass eine hohe Messempfindlichkeit durch die relativ dünnen Dehnungszonen innerhalb der Messtaschen 5 erreichbar ist.

Bei einer alternativen Ausführung des Drehmomentsensors kann dieser auch mit mindestens 3, 4, 8, 16 oder bis zu 32 Messtaschen 5 ausgestattet sein, auf deren Grundflächen 15 symmetrisch zur Drehachse 4 mindestens vier Scherkraftaufnehmer in Winkeln von vorzugsweise 90° und 45° appliziert werden. Dabei sind die Abmessungen insbesondere der Versteifungsstege 6 und der Grundflächenstärke als Dehnungsmess- oder Verformungskörper 15 von den zu übertragenen Nenndrehmomenten abhängig. Auch die Durchmesser und Dicken der Befestigungsflansche 1, 2 ist von den vorgegebenen Nenndrehmomenten abhängig, so dass bei einem Nenndrehmoment von z.B. 100 Nm vorzugsweise ein Flanschdurchmesser von ca. 120 mm und bei einem Nenndrehmoment von z.B. 10 kN vorzugsweise ein Befestigungsflanschdurchmesser von ca. 260 mm bei Außenringdicken von ca. 15 bis 30 mm vorgesehen sind. Dadurch ergeben sich axiale Längen der Drehmomentsensoren von ca. 35 bis 65 mm bei Nenndrehmomenten von 100 Nm bis 10 kNm, die extrem kurzbauend und daher für nahezu alle Anwendungsfälle einsetzbar sind.

Bei einer nicht dargestellten Ausführungsform des vorbeschriebenen Drehmomentsensors können die Messtaschen 5 auch axial gegenüberliegend angeordnet werden, die jeweils von ihren belassenen Grundflächen 15 als Dehnungsmesskörper voneinander getrennt sind. Dadurch ergeben sich Öffnungen der Messtaschen 5, die einerseits zu den Nutflächen 14 und andererseits zur Vertiefung 11 gerichtet sind. Vorzugsweise werden dabei die Dehnungsmessstreifen 20 auf den Grundflächen 15 appliziert, die zur Vertiefung 11 gerichtet sind, wobei diese Ausführung dann hermetisch abdichtbar ist. Andererseits können auch auf den gegenüberliegenden Grundflächen, die zu den Nutflächen 14 gerichtet sind, Scherkraftaufnehmer 20 appliziert sein, wodurch vorteilhafterweise auch störende Biegespannungen kompensiert werden können.

Zur Auswertung und Speisung der Dehnungsmessstreifen 20 ist zusätzlich in der Vertiefung 11 noch eine nicht dargestellte Messelektronik eingepasst, durch die die Scherkraftaufnehmer 20 insbesondere zu einer Wheatstonschen Brücke verschaltet, die Messsignale verstärkt, digitalisiert und zur Übertragung moduliert werden. Vorzugsweise wird dazu die in der vorgesehenen Vertiefung 11 angeordnete Messelektronikschaltung mit einem kraftnebenschlußfreien nicht dargestellten Deckel durch eine abgedichtete Schraub- oder Schweißverbindung hermetisch verschlossen, wodurch die empfindlichen Messelemente feuchtigkeits- und staubfrei untergebracht sind.

Zur Übertragung der Messsignale ist am Außenumfang des Außenrings 10 des Messflansches 2 eine Antenne 16 eingegossen. Zur Verhinderung einer fliehkraftabhängigen Ablösung sind dabei die Antennenwindungen des Telemetriesystems in eine Schwalbenschwanznut 7 eingegossen, die die sich nach aussen verengt. Dadurch sind mit dem vorbeschriebenen Drehmomentsensor Nenndrehzahlen von mindestens 25.000 bis zu 50.000 Umdrehungen pro Minute ausführbar, ohne dass sich dadurch die Antennenwindungen des Telemetriesystems fliehkraftbedingt ablösen könnten.

Bei der Einleitung eines Drehmoments über den ersten Befestigungsflansch 1 wird dieses über den Außenring 10 und das radial innere Scheibenelement 17 zum Momentenübertragungselement 3 und von diesem in den Messflansch 2 eingeleitet. Dort wird das Drhemoment von dem inneliegenden Einleitungsbereich des Scheibenelements 17 über die Versteifungsstege 6 und die Grundfläche 15 als Dehnungsmesskörper der Messtaschen 5 auf den Außenring 10 des Messflansches 2 übertragen. Dabei entsteht durch die tangentialen Übertragungskräfte in den membranartigen Grundflächen 15 der Messtaschen 5 mindestens eine tangentiale Dehnung, die durch die Scherkraftaufnehmer 20 erfasst wird und die dem übertragenen Drehmoment proportional ist. Mithilfe einer Wheatestonschen Brückenschaltung wird aus den erfassten Messsignalen das übertragene Drehmoment gebildet. Daraus werden durch die Messelektronik die modulierten Messsignale erzeugt, die über die im Außenring 10 vorhandene Antennenspule 16 berührungslos zu einer stationären Auswertevorrichtung übertragen werden, wo diese als Messwert anzeigbar oder beispielsweise zu Regelvorgängen weiterverarbeitbar zur Verfügung stehen.

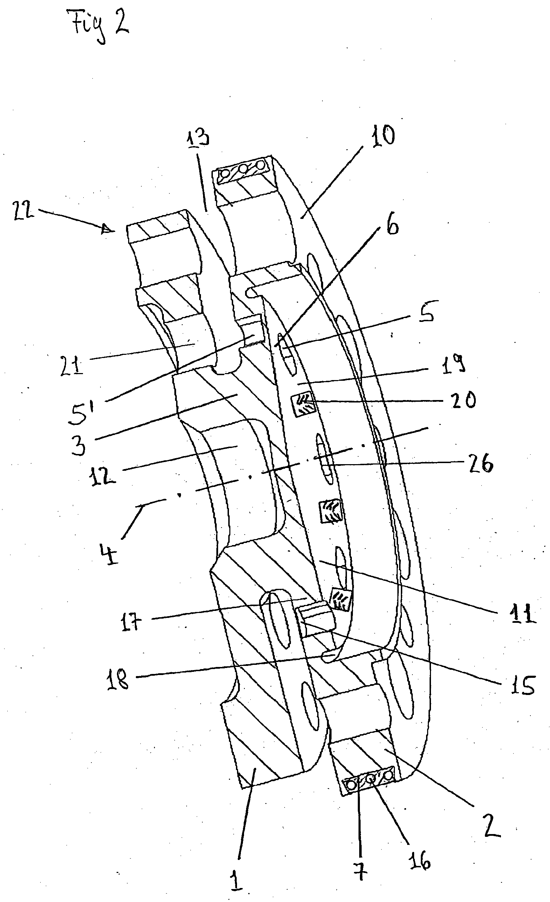

In Fig. 2 der Zeichnung ist eine vorteilhafte Ausführungsform eines Drehmomentsensors dargestellt, der sich im wesentlichen durch eine axial und tangential gegeneinander versetzte Anordnung der Messtaschen 5 von der Ausführung nach Fig. 1 unterscheidet. Dabei besteht der Drehmomentsensor ebenfalls aus einem Grundkörper 22 mit zwei parallel gegenüberliegend angeordneten Befestigungsflanschen 1, 2, die über ein ringförmiges Momentenübertragungselement 3 axial miteinander verbunden sind. Dabei weist der Messflansch als zweiter Befestigungsflansch 2 ebenfalls eine axial von außen nach innen gerichtete zylindrische Vertiefung 11 auf, die zusätzlich von einer axial eingebrachten Entlastungsnut 18 von dem Außenring 10 störkraftmässig entkoppelt ist. Denn bei ungleichmäßigen Verschraubungen der Befestigungsflansche 1, 2 mit den Wellenenden oder bei anderen axialen Biegespannungsbelastungen werden diese Störungen durch die Entlastungsnut 18 von den federelastischen Verformungskörpern auf der Grundfläche 15 der Messtaschen 5 ferngehalten.

Radial innenliegend zur Entlastungsnut 18 sind um die Drehachse 4 die koaxial umlaufenden Masstaschen bzw. Messtaschenabschnitte angeordnet, die ebenfalls durch Versteifungsstege 6 voneinander getrennt sind. Allerdings sind bei der Ausführung nach Fig. 2 der Zeichnung die Messtaschen 5 axial und tangential abwechselnd gegeneinander versetzt. Dabei sind sowohl acht Messtaschen 5 axial nach außen gerichtet und acht Messtaschen 5' axial offen zur Abstandsnut 13 angeordnet. Die Messtaschen 5, 5' umfassen dabei einen nutförmigen Kreisabschnitt als Ringnutabschnitt 26 in einem vorgegeben Abstand zur Drehachse 4 von ca. 18° bis 20°, wobei die Versteifungsstege 6 dazwischen einen ringförmigen Kreisabschnitt von ca. 2° bis 5° umfassen. Dabei sind allerdings die Kreisabschnitte der Versteifungsstege 6 reziprok zu den Messtaschen 5, 5' und damit radial innen breiter als außen.

Durch die abwechselnd axial gegeneinander versetzten Messtaschen 5, 5' entstehen tangential zwischen den Messtaschen 5, 5' relativ breite ebene Flächenabschnitte, die im wesentlichen die der Taschengrundfläche 15 axial gegenüberliegende Taschenaußenfläche 19 darstellen, die beidseitig als membranartiger federelastischer Verformungskörper wirkt. Deshalb sind die als Scherkraftaufnehmer ausgebildeten Dehnungsmessstreifen 20 zumindest innerhalb der Vertiefung 11 auf der Taschenaußenfläche 19 appliziert. Dies ist insbesondere deshalb vorteilhaft, weil dadurch die manuelle Aufbringung der Dehnungsmessstreifen 20 vereinfacht und genauer ausführbar ist.

Die Dehnungsmessstreifen 20 könnten auch axial gegenüberliegend auf den Taschenaußenflächen 19 zur Abstandsnut 13 angeordnet werden, wodurch diese dann aber nicht hermetisch dicht gegenüber äußeren Einflüssen abdichtbar wären. Die Ausfräsung der zur Abstandsnut 13 gerichteten Messtaschen 5' erfolgt dann vorteilhaft durch die in dem ersten Befestigungsflansch 1 zusätzlich vorgesehenen Zugangsbohrungen 21, die im vorgegebenen radialen Abstand symmetrisch zur Drehachse 4 angeordnet sind, wobei deren Durchmesser mindestens der tangentialen Erstreckung der Messtaschen 5' entspricht.

Durch die tangential und axial versetzten Messtaschen 5, 5' wird nicht nur die Montage der Dehnungsmessstreifen 20 erleichtert, sondern auch die Entkopplung von störenden Einspannkräften und Biegespannungen verbessert, da diese dann weitgehend von den Messkörperflächen ferngehalten werden. Ansonsten ist der Drehmomentsensor nach Fig. 2 der Zeichnung identisch zu der Ausführung nach Fig. 1 ausgebildet. Dabei sind beide Grundkörper 22 einteilig aus einem kurzen runden Metallstangenmaterial ausgearbeitet, das vorzugsweise aus einer rostfreien Stahllegierung besteht, die ein besonders federelastisches Dehnungsverhalten und eine geringe Hysterese aufweist. Der Grundkörper 22 kann aber auch aus Aluminium, Titan oder anderen Metallen bestehen. Als Scherkraftaufnehmer können auch entsprechende Aufnehmer eingesetzt werden, die als Oberflächenwellen-Resonatoren oder als magnetoresistive oder magnetoelastische Sensoren ausgebildet sind und die Dehnung an einem Verformungskörper erfassen.

## Patentansprüche

1. Drehmomentsensor, der aus einem ersten und einem zweiten scheibenförmigen Befestigungsflansch (1, 2) besteht, die sich parallel axial gegenüber liegen und durch ein radial innenliegendes Momentübertragungselement (3) starr miteinander verbunden sind, wobei der zweite Befestigungsflansch (2) als Messflansch ausgebildet ist, der auf einem koaxial umlaufenden Bereich zwischen seinem radialen äußeren Befestigungsbereich (10) und dem koaxial innenliegenden Momentübertragungselement (3) mehrere durch radiale Versteifungsstege (6) voneinander getrennte Ausnehmungen (5, 5') und Scherkraftaufnehmer (20) aufweist,
**dadurch gekennzeichnet,**
**dass** die Ausnehmungen durch mindestens drei einseitig axial nach außen offene Messtaschen (5, 5') gebildet sind,
**dass** die Grundfläche (15) der Messtaschen (5, 5') als eine ebene geschlossene Fläche ausgebildet ist, die einen gleichbleibend dünnen federelastischen Verformungskörper darstellt, und
**dass** auf den Grundflächen (15) oder den axial gegenüberliegenden Außenflächen (19) der Messtaschen (5, 5') die Scherkraftaufnehmer (20) appliziert sind.

2. Drehmomentsensor nach Anspruch 1, **dadurch gekennzeichnet, dass** der Drehmomentsensor aus einem einteiligen kreisrunden metallischen Grundkörper (22) besteht, der etwa in der Mitte seiner axialen Länge eine umlaufende nach außen offene Abstandsnut (13) aufweist, durch die auf der einen axialen Seite der erste Befestigungsflansch (1) und auf der anderen axialen Seite der Messflansch (2) gebildet wird.

3. Drehmomentsensor nach Anspruch 2, **dadurch gekennzeichnet, dass** der Grundkörper (22) aus einer Stahllegierung, aus Aluminium oder Titan besteht.

4. Drehmomentsensor nach einen der Ansprüche 1 bis 3, **dadurch gekennzeichnet, dass** der erste und der zweite Befestigungsflansch (1, 2) zur Drehachse (4) rotationssymmetrisch ausgebildet sind und in ihrem radialen äußeren Befestigungsbereich jeweils einen Außenring (10) aufweisen, der mindestens drei axial symmetrisch verteilte Befestigungsbohrungen (8, 9) aufweist, deren radialer Abstand zur Drehachse (4) gleich ist.

5. Drehmomentsensor nach einem der Ansprüche 2 bis 4, **dadurch gekennzeichnet, dass** die Abstandsnut (13) als radial symmetrisch zur Drehachse (4) umlaufende Nut ausgebildet ist, deren Tiefe mindestens den Außenringbereich (10) und den radialen Bereich der Messtaschen (5, 5') und der Versteifungsstege (6) umfasst und mindestens bis zum ring- oder scheibenförmigen Momentübertragungselement (3) reicht.

6. Drehmomentsensor nach einem der vorhergehenden Ansprüche, **dadurch gekennzeichnet, dass** der Messflansch (2) als flache kreisrunde Scheibe ausgebildet ist, die auf einem radialen inneren Scheibenelement (17) und in gleichem radialen Abstand zur Drehachse (4) mindestens 3, 4, 8, 16 oder 32 Messtaschen (5, 5') aufweist.

7. Drehmomentsensor nach Anspruch 6, **dadurch gekennzeichnet, dass** die Messtaschen (5, 5') als kreisförmige Ringnutabschnitte (26) von mindestens 18° bis 110° ausgebildet sind und dass jeder der Versteifungsstege (6) zwischen den Messtaschen (5, 5') einen winkelmäßigen Ringflächenbereich mit einer Breite von mindestens 1,25° bis 15° aufweist.

8. Drehmomentsensor nach Anspruch 7, **dadurch gekennzeichnet, dass** die radialen Seitenwände (23) der Messtaschen (5, 5') derart zur Drehachse (4) in einem spitzen Winkel verjüngt zulaufen, dass die Versteifungsstege (6) eine etwa trapezförmige Oberfläche aufweisen, die sich radial nach außen verjüngt.

9. Drehmomentsensor nach einem der vorhergehenden Ansprüche, **dadurch gekennzeichnet, dass** die Scherkraftaufnehmer (20) als Dehnungsmessstreifen ausgebildet sind.

10. Drehmomentsensor nach einem der vorhergehenden Ansprüche, **dadurch gekennzeichnet, dass** mindestens der Messflansch (2) eine zylinderförmige axiale Vertiefung (11) gegenüber dem Außenring (10) aufweist, in dessen Innenraum eine Messelektronikschaltung befestigt ist, wobei der Innenraum mit einem kraftnebenschlußfrei ausgeformten oder angebrachten Deckel hermetisch verschließbar ist.

11. Drehmomentsensor nach einem der vorhergehenden Ansprüche, **dadurch gekennzeichnet, dass** die Außenflächen (19) der Messtaschen (5) zur Abstandsnut (13) gerichtet sind und mit der Nutfläche (14) eine ebene Fläche bilden und die Scherkraftaufnehmer (20) auf der Grundfläche (15) der Messtaschen (5) appliziert sind.

12. Drehmomentsensor nach einem der Ansprüche 1 bis 10, **dadurch gekennzeichnet, dass** die Messtaschen (5, 5') axial gegeneinander gerichtet in dem Messflansch (2) eingelassen sind, wobei diese tangential abwechselnd jeweils axial nach innen zur Nutfläche (14) oder nach außen zur Vertiefung (11) offen sind, wobei die Scherkraftaufnehmer (20) auf der Grundfläche (15) oder der Außenfläche (19) der Messtaschen (5, 5') appliziert sind.

13. Drehmomentsensor nach einem der Ansprüche 1 bis 10, **dadurch gekennzeichnet, dass** die Messtaschen (5, 5') axial gegeneinander gerichtet sind, wobei die gegeneinander gerichteten Messtaschen (5, 5') im selben tangentialen Umfangsabschnitt des Messflansches (2) angeordnet sind und deren Grundflächen (15) sich parallel gegenüber liegen, auf denen die Scherkraftaufnehmer (20) mindestens auf den axial nach außen zur Vertiefung (11) gerichteten Grundflächen (15) angeordnet sind

14. Drehmomentsensor nach einem der vorhergehenden Ansprüche, - **dadurch gekennzeichnet, dass** radial zwischen dem Außenring (10) und dem mit Messtaschen (5, 5') versehenen Bereich mindestens eine Entlastungsnut (18) axial und koaxial zur Drehachse (4) eingelassen ist, die zur Entkopplung der Störkräfte oder Störmomente dient.

15. Drehmomentsensor nach einem der vorhergehenden Ansprüche, **dadurch gekennzeichnet, dass** in die Umfangsfläche des Außenrings (10) des Messflansches (2) eine umlaufende Schwalbenschwanznut (7) eingebracht ist, in die eine Antennenspule (16) eines Telemetriesystems zur Übertragung der Speiseenergie und der Messsignale eingegossen ist.

## Claims

1. A torque sensor comprising a first and a second disc-shaped fastening flange (1, 2) arranged axially parallel to each other and which are rigidly connected to each other by a radially inward torque transmission element (3), wherein the second fastening flange (2) is embodied as a measuring flange having a plurality of recesses (5, 5') and shear force transducers (20), separated from each other by radial stiffening webs (6), on a coaxially circumferential region between its radial outer attachment region (10) and the coaxial inner torque transmission element (3),
**characterised in**
**that** the recesses are formed by at least three measurement recesses (5, 5') facing axially outwards to one side,
**that** the base surface (15) of the measurement recesses (5, 5') is embodied as a closed planar surface forming a resilient deformation member which is uniformly thin, and
**that** the shear force transducers (20) are applied to the base surfaces (15) or to the axially opposite outer surfaces (19) of the measurement recesses (5, 5').

2. The torque sensor according to claim 1, **characterised in that** the torque sensor consists of an integral circular metallic base member (22) having a circumferential, outwardly open spacing groove (13) approximately in the middle of its axial length, by which the first fastening flange (1) is formed on the one axial side and the measuring flange (2) is formed on the other axial side.

3. The torque sensor according to claim 2, **characterised in that** the base member (22) is made of a steel alloy, aluminium or titanium.

4. The torque sensor according to any one of claims 1 to 3, **characterised in that** the first and the second fastening flange (1, 2) are embodied rotationally symmetrical in relation to the rotational axis (4) and that each has an outer ring (10) in its radially outer attachment region, said outer ring (10) having at least three fastening bores (8, 9) which are distributed axially symmetrically and radially equidistant from the rotational axis (4).

5. The torque sensor according to any one of claims 2 to 4, **characterised in that** the spacing groove (13) is embodied as a circumferential groove which is radially symmetrical in relation to the rotational axis (4), has a depth which includes at least the outer ring region (10) and the radial extension of the measurement recesses (5, 5') and of the stiffening webs (6) and which extends at least as far as the annular or disc-shaped torque transmission element (3).

6. The torque sensor according to any one of the preceding claims, **characterised in that** the measuring flange (2) is embodied as a flat circular disc having at least 3, 4, 8, 16 or 32 measurement recesses (5, 5') arranged on a radially inward disc member (17) and radially equidistant from the rotational axis (4).

7. The torque sensor according to claim 6, **characterised in that** the measurement recesses (5, 5') are embodied as circular annular groove sections (26) with an angular width ranging from at least 18° to 110° and that each of the stiffening webs (6) between the measurement recesses (5, 5') has an annular surface region with an angular width ranging from at least 1.25° to 15°.

8. The torque sensor according to claim 7, **characterised in that** the radial side walls (23) of the measurement recesses (5, 5') taper at an acute angle towards the rotational axis (4) in such a way that the stiffening webs (6) have an approximately trapezoidal surface which tapers radially outwards.

9. The torque sensor according to any one of the preceding claims, **characterised in that** the shear force transducers (20) are embodied as strain gauges.

10. The torque sensor according to any one of the preceding claims, **characterised in that** at least the measuring flange (2) has a cylindrical axial indentation (11) relative to the outer ring (10), in the inner space of which a measurement electronics circuit is fixed, wherein the inner space is hermetically closable by a cover that is formed or mounted without force shunting.

11. The torque sensor according to any one of the preceding claims, **characterised in that** the outer surfaces (19) of the measurement recesses (5) face towards the spacing groove (13) and form a planar surface with the groove surface (14), and that the shear force transducers (20) are applied to the base surface (15) of the measurement recesses (5).

12. The torque sensor according to any one of claims 1 to 10, **characterised in that** the measurement recesses (5, 5') are sunk into the measuring flange (2) axially opposite each other, the measurement recesses (5, 5') being tangentially alternatingly open axially inwardly towards the groove surface (14) or outwardly towards the indentation (11) respectively, wherein the shear force transducers (20) are applied to the base surface (15) or the outer surface (19) of the measurement recesses (5, 5').

13. The torque sensor according to any one of claims 1 to 10, **characterised in that** the measurement recesses (5, 5') are arranged axially opposite each other, wherein the oppositely arranged measurement recesses (5, 5') are arranged in the same tangential circumferential section of the measuring flange (2), and their base surfaces (15) lie parallel to and opposite each other, on which the shear force transducers (20) are arranged at least on the base surfaces (15) that are oriented axially outwards towards the indentation (11).

14. The torque sensor according to any one of the preceding claims, **characterised in that** at least one load relief groove (18) for decoupling the perturbing forces or torques is sunk radially between the outer ring (10) and the region provided with measurement recesses (5, 5') and axially and coaxially in relation to the rotational axis (4).

15. The torque sensor according to any one of the preceding claims, **characterised in that** a circumferential dovetail groove (7) is recessed into the circumferential surface of the outer ring (10) of the measuring flange (2), into which dovetail groove (7) an antenna coil (16) of a telemetry system for transmission of the supply energy and the measuring signals is cast.

## Revendications

1. Capteur de couple, qui se compose d'une première et d'une seconde bride de fixation (1, 2) en forme de disque, lesquelles se font face axialement parallèlement et sont reliées de façon rigide entre elles par un élément de transmission de couple (3) radialement intérieur, dans lequel la seconde bride de fixation (2) est formée en tant que bride de mesure, laquelle comprend, dans une zone coaxialement périphérique située entre sa zone de fixation (10) extérieure radiale et l'élément de transmission de couple (3) coaxialement intérieur, plusieurs capteurs de force de cisaillement (20) et plusieurs évidements (5, 5') séparés les uns des autres par des nervures de renforcement radiales (6),
**caractérisé en ce que**,
les évidements sont formés par au moins trois cavités de mesure (5, 5') ouvertes d'un côté axialement vers l'extérieur,
la surface de base (15) des cavités de mesure (5, 5') est formée sous la forme d'une surface plane fermée représentant un corps de déformation élastique uniformément mince, et
les capteurs de force de cisaillement (20) sont appliqués sur les surfaces de base (15) ou sur les surfaces extérieures (19) axialement opposées des cavités de mesure (5, 5').

2. Capteur de couple selon la revendication 1, **caractérisé en ce que** le capteur de couple se compose d'un corps de base (22) monobloc, métallique et de forme circulaire, lequel comprend, approximativement au niveau du milieu de sa longueur axiale, une rainure d'espacement (13) périphérique ouverte vers l'extérieur, à travers laquelle sont formées la première bride de fixation (1) sur l'un des côtés axiaux et la bride de mesure (2) sur l'autre côté axial.

3. Capteur de couple selon la revendication 2, **caractérisé en ce que** le corps de base (22) est réalisé en alliage d'acier, en aluminium ou en titane.

4. Capteur de couple selon l'une quelconque des revendications 1 à 3, **caractérisé en ce que** les première et seconde brides de fixation (1, 2) présentent une symétrie de révolution par rapport à l'axe de rotation (4) et disposent chacune d'un anneau extérieur (10) dans leur région de fixation radialement extérieure, ledit anneau extérieur comprenant au moins trois perçages de fixation (8, 9) répartis symétriquement axialement et disposés radialement à équidistance de l'axe de rotation (4).

5. Capteur de couple selon l'une quelconque des revendications 2 à 4, **caractérisé en ce que** la rainure (13) d'espacement est formée en tant que rainure périphérique et radialement symétrique par rapport à l'axe de rotation (4), dont la profondeur comprend au moins la zone de l'anneau extérieur (10) et la zone radiale des cavités de mesure (5, 5') et des nervures de renforcement radiales (6) et dont la profondeur s'étend au moins jusqu'à l'élément de transmission de couple (3) en forme d'anneau ou de disque.

6. Capteur de couple selon l'une quelconque des revendications précédentes, **caractérisé en ce que** la bride de mesure (2) est formée en tant que disque circulaire plat, lequel comprend au moins 3, 4, 8, 16 ou 32 cavités de mesure (5, 5') disposées sur un élément de disque (17) radialement intérieur et à équidistance radialement de l'axe de rotation (4).

7. Capteur de couple selon la revendication 6, **caractérisé en ce que** les cavités de mesure (5, 5') sont formées en tant que sections de rainure annulaire (26) de forme circulaire et d'angle compris entre au moins 18° et 110°, et **caractérisé en ce que** chacune des nervures de renforcement (6) radiales comprend entre les cavités de mesure (5, 5') une zone de surface annulaire anguleuse ayant une largeur comprise entre au moins 1,25° et 15°.

8. Capteur de couple selon la revendication 7, **caractérisé en ce que** les parois latérales radiales (23) des cavités de mesure (5, 5') se rétrécissent quant à former un angle aigu vers l'axe de rotation (4) de telle sorte que les nervures de renforcement (6) présentent une surface de forme approximativement trapézoïdale qui se rétrécit radialement vers l'extérieur.

9. Capteur de couple selon l'une quelconque des revendications précédentes, **caractérisé en ce que** les capteurs de force de cisaillement (20) sont formés en tant que jauges de contrainte.

10. Capteur de couple selon l'une quelconque des revendications précédentes, **caractérisé en ce qu'**au moins la bride de mesure (2) présente un renfoncement (11) axial de forme cylindrique faisant face à l'anneau extérieur (10), dans l'espace intérieur duquel est fixé un circuit électronique de mesure, dans lequel l'espace intérieur peut se fermer hermétiquement avec un couvercle monté ou formé sans dérivation de force.

11. Capteur de couple selon l'une quelconque des revendications précédentes, **caractérisé en ce que** les surfaces extérieures (19) des cavités de mesure (5) sont dirigées jusqu'à la rainure d'espacement (13) et forment une surface plane avec la surface de la rainure (14), et **caractérisé en ce que** les capteurs de force de cisaillement (20) sont appliqués sur la surface de base (15) des cavités de mesure (5).

12. Capteur de couple selon l'une quelconque des revendications 1 à 10, **caractérisé en ce que** les cavités de mesure (5, 5') sont engagées axialement l'une en face de l'autre dans la bride de mesure (2), dans lequel celles-ci sont ouvertes de manière alternativement tangentielle axialement vers l'intérieur en direction de la surface de rainure (14) ou vers l'extérieur en direction du renfoncement (11) respectivement, dans lequel les capteurs de force de cisaillement (20) sont appliqués sur la surface de base (15) ou sur la surface extérieure (19) des cavités de mesure (5, 5').

13. Capteur de couple selon l'une quelconque des revendications 1 à 10, **caractérisé en ce que** les cavités de mesure (5, 5') sont orientées axialement l'une en face de l'autre, dans lequel les cavités de mesure (5, 5') orientées l'une en face de l'autre sont disposées dans la même portion périphérique tangentielle de la bride de mesure (2) et ont leurs surfaces de base (15) qui se trouvent l'une en face de l'autre parallèlement, sur lesquelles les capteurs de force de cisaillement (20) sont disposés au moins sur les surfaces de base (15) orientées axialement vers l'extérieur en direction du renfoncement (11).

14. Capteur de couple selon l'une quelconque des revendications précédentes, **caractérisé en ce que**, radialement entre l'anneau extérieur (10) et la zone pourvue de cavités de mesure (5, 5'), au moins une rainure de déchargement (18) est engagée axialement et coaxialement par rapport à l'axe de rotation (4), laquelle sert au découplage des forces perturbatrices ou des couples perturbateurs.

15. Capteur de couple selon l'une quelconque des revendications précédentes, **caractérisé en ce qu'**une rainure circulaire en queue d'aronde (7) est introduite dans la surface périphérique de l'anneau extérieur (10) de la bride de mesure (2), une bobine d'antenne (16) d'un système télémétrique pour la transmission d'énergie d'alimentation et de signaux de mesure étant intégrée dans ladite rainure en queue d'aronde (7).
